# EUROPEAN PATENT APPLICATION

(11) **EP 2 018 012 A1**
(43) Date of publication of application: **21.01.2009**
(21) Application number: 07014193.2
(22) Date of filing: 19.07.2007
(51) Int. Cl.: H04L 29/06, H04L 29/08

(54) **An interactive system designed for the supply or submission of general information as well as advertising, marketing and other material through electronic communication technologies, either in connection or in line with location-based services, with the possibility of interactive connections**

(71) Applicant: Balmadur Anstalt, 9492 Eschen (LI)
(72) Inventor: Baladan, Dusko, 1000 Ljubjana (SI); Marolt, Uros, 8232 Sentrupert (SI)
(74) Representative: Marn, Jure

(57) **Abstract**

The object of this invention is an interactive system designed for the supply or submission of general information as well as advertising, marketing and other material through electronic communication technologies, either in connection or in line with location-based services, with the possibility of interactive connections.

The system is comprised of media positioned at a specific mobile or fixed location. The media is controlled by local servers, while the latter are controlled by the main server which sends them general location-dependent information and which supports interaction with a user. The user communicates with the main server through technologies of multimedia communication devices and/or wireless electronic communication devices.

The system provides a new type of communication with the users which is interactive and therefore does not go only one way. In addition, the information is based on current location of a specific media. The system also supports the advertising option.

## Description

### Technical area

The supply or submission of general location-specific information which is useful to the user at a certain location, through a medium (especially with all possible picture displays) designed for users who can interactively communicate through the system by using multimedia communication devices or wireless electronic communication devices.

### Problem review

The problem that is being solved by this invention is how to present generally useful information to individuals/users in terms of their location. Users can acquire further information or other useful solutions with their interactive inclusion into the system by using multimedia communication devices.

### Technical condition

There are plenty of well-known solutions offered in the area of supplying general information to different locations (or vehicles), mostly known as patents DE4340265 and DE 3439014. In various places, dependent on the location, the user is shown useful information or advertising messages displayed on graphic screens, with the screens either fixed or attached to the vehicles. Solutions that have been known so far do not support interactions among users nor do they enable the use of location-based services which can support a supply of location-specific information as well as interactivity and, consequently, also the possibility of (direct) advertising.

The invention presented hereby offers the possibility to include the existing (known) products and technologies into the system:
- Media - screens (e.g. LCD) with fast reaction time and high resolution, providing a clear picture even at direct sun light.
- Servers - these control individual media operation and communicate among each other. The servers can be mutually compatible or connected into a network of main and local servers.
- Transport channels - these enable connections among servers by using either stationary or mobile/wireless electronic communication devices. With regard to the current state of technical development in the area of mobile/wireless electronic communication, it is possible to use one of the following connections:
   - **GPRS** is an abbreviation for General Packet Radio Service that enables packet connections within cellular networks. GPRS provides a fast mobile access and establishes connections with a mobile network in cases when internet access is required.
   - **EDGE** (Enhanced Data Rates for Global Evolution) is a 2.5 G technology, which enables data transfer speeds comparable to broadband networks with mobile devices. This is a global standard in wireless communication, which is being quickly spread all over the world by GSM network operators.
   - **UMTS / 3G** is an abbreviation standing for the 3^{rd} generation of mobile electronic communication devices which provides a transfer of voice (phone calls) as well as video and other material (e.g. information transfer, emailing and direct message exchanges). While the 3G technology currently supports data speeds of up to 384 Kb/s, upgrades in the terms of increased data transfer speed are expected.
   - **High-Speed Downlink Packet Access (HSDPA)** is a mobile electronic communication protocol which belongs to the 3^{rd} generation technology - the 3.5 generation and provides the data transfer speed of up to 1.8 Mbit/s or 3.6 Mbit/s at the downlink. In near future, the HSDPA technology will enable the data speed of up to 7.2 Mbit/s.
   - **Wireless Local Area Network (WLAN)** enables the establishment of wireless connections among portable and desktop computers, printers and palmers, and company network through access points. WLAN enables greater transfer speeds than UMTS. The 802.11a Standard enables transfer at the speed of 54 Mbit/s at the bandwidth of 5 GHz. The 802.11b Standard enables the transfer speed of 11 Mb/s at the bandwidth of 2.4 GHz. The next standard levels provide higher transfer speeds.
   - **Bluetooth** is an extremely good supplement for wireless networks, since it enables simple connection among devices that support this technology standard, with no need of being connected to the network.
   - **Infrared Connections** are similar to Bluetooth connections, meaning that they represent another way of connecting compatible devices to a network. With the infrared connections, the data is transferred over radio waves on short distances. (The distances are even shorter than with the Bluetooth technology.)
   - **GPS** (Global Positioning System) is a satellite system designed for determining a location, which uninterruptedly provides data on geographical latitude, geographical longitude as well as altitude and the speed of movement to the users located at any place, provided that they are equipped with proper equipment. The GPS technology is used with a number of maritime-specific and environment-related applications as well as with navigation, tracking and monitoring applications.
   - **TETRA -** originally, this abbreviation stood for Trans-European Trunked Radio which meant "All-European radio connections system". Since this technology also came into use world wide, it was renamed to Terrestrial Trunked Radio. This system provides the first proper open digital standard designed for private wireless networks (PMRs) standardized by ETSI - European Telecommunications Standards Institute.

### A description of the new solution

The object of hereby presented invention is an interactive system designed for supply or submission of general information as well as advertising, marketing and other material through electronic communication technologies, either in connection or in line with location-based services, with the possibility of interactive connections (in further text referred to as DUD).

DUD is a system designed for informing the public, which uses local-based services or operates in line with local-based services and, by using data transfer through multimedia communication devices/wireless electronic communication technologies, also enables interactive cooperation among users.

DUD refers to the area of supply/submission of general location-specific information which is useful to the user at a certain location, through a medium (especially with all possible picture displays) designed for users who can interactively communicate through the system by using multimedia or wireless electronic communication devices, with the media being any of the graphic displays available

DUD is primarily composed of the following elements:
- Media (M), located on a mobile or static location (e.g. at a bus station or in a city bus, train, in a waiting room, etc). Media (M) refers to high-resolution screens (e.g. LCD) showing fast reaction time and high resolution, enabling a clear picture even at direct sun light. The screen can be equipped with loud speakers (built-in or separated) in order to get an audio-visual performance.
- Local servers (LS) are situated on each separate location. They control single media operation on every specific location and communicate with the main server. Local servers, positioned at individual locations, transmit media-presented information (audio, video records) found on this location and receive user feedback through the main server. Both the media and local servers are connected through a transport channel. In addition, local servers record location-specific information (if they are positioned on a mobile unit with a GPS support) and send it to the main server by using mobile or wireless communication technologies. To each of the local servers, the main server can send information based on the location of local server, while the local server presents this location-based information in the media (e.g. when a vehicle arrives to (or crosses over) a certain location point, for example a bus stop, railway station, a certain geographically determinable point - object positioned at a certain location, the medium displays useful information related to this location point). Location data, recorded by a particular local server, allows upgrading in terms of interactivity. By means of mobile and wireless electronic communication devices (SMS, MMS, mobile portals, M-ports and other »GSM service« tools), users can communicate with the main server and acquire additional information related to a certain location and/or interactively use other services (e.g. buy a concert ticket, take part in a survey, etc.). Local servers can be used as an interactive means of communication among users (e.g. media blogs or surveys conducted via multimedia communication devices). All local servers positioned on mobile locations are equipped with GPS.
- Main server (GS) has the task to communicate with local servers. The main server sends information to local servers, which is supposed to be presented in media positioned at a certain locations. The main server sends data through a transport channel. Each local server is equipped with the required technology (SIM card, WLAN adapter, GPS interface, etc) in order to communicate with the main server. A local server also sends location-related information to the main server and, based on this information, the main server sends location-based information to local servers. The main server also supports user interaction, which is displayed in media (by using local servers).
- **Transport channels** or connections allow communication between main and local servers by using mobile or wireless electronic communication. Specific technologies, which can be used for transport channels in line with the current state of development in the technology of mobile electronic communications, are described under *Technical condition* (GPRS, EDGE, UMTS/3G, High-Speed Downlink Access (HSDPA), Wireless Local Area Network (WLAN), Bluetooth, infrared connections, GPS, TETRA, etc.)

The system offers generally useful information to individuals/users in terms of their location. Users can acquire further information or other useful solutions by their interactive inclusion into the system and by using multimedia communication devices.

A user is anyone who finds himself/herself on a certain location at a certain moment and is exposed to the media positioned on that particular location. The user can simply read information, choose to acquire in-depth information or use one of the other services available in line or connection with location-based services. Users communicate with servers (main and local) through their multimedia communication devices by using the following services: SMS (Short Message Services), MMS (Multimedia Messaging Services), mobile portals, video calls, video messages, blogs, etc. Users can download certain contents from the media by using standardized solutions.

This system supports new applications, with one-to-one communication between the application and the user, extended in such a way that the communication process is entered by a number of users who make up virtual groups. All mobile users take part in this process and interactive communication is not presented only on a certain medium positioned at a specific location but also on web and mobile portals, TVs, etc. This is an interactive communication carried out among individuals, not merely among users and electronic devices.

The essence of this invention is hereafter explained in detail through a description of the implementation case and an enclosed scheme, with the scheme being part of this patent request. The scheme shows the following items:
Scheme 1: monitor (1), local server (2), main server (3), transport channel connecting the main and local server (4), transport channel connecting the local server and media (5), transport channel connecting the main server, local server and a multimedia communication device (6), multimedia communication device (7), the area of interactive communication between the system and the user (8), a vehicle (9).

As shown in the presented implementation case, the global server (3) communicates with local servers (2) and sends them information displayed in the media (1), with the local servers positioned at a particular location. A local server (2) can be either fixed or attached to a mobile unit or a vehicle (9). In case the local server (2) is fixed, the server location is known, but with the local server (2) which is attached to a mobile unit, the system is equipped with a positioning device (GPS). The main server (3) sends information to local servers (2) trough transport channels connecting the main and local server (4). The local server (2) sends location-related information to the main server (3). Based on this information, the main server (3) sends location-based information to the local server (2).

Local servers (2) control activities carried out by individual media (1) at particular locations and communicate with the main server (3). At a certain location, the local server (2) sends information (audio, video records) to media (1) positioned on this location, which is presented on these media, and receives feedback from users through the main server 3.

Media and local servers are connected through a transport channel established between local servers and media (5). The main server (3), local servers (2), and multimedia communication devices (7) are interlinked with a transport channel established among the main server, local server and multimedia communication device (6). In addition, local servers (2) record location-related information (in case they are installed on a mobile unit equipped with a GPS system) and send it to the main server (3) by using mobile or wireless electronic communication technology. In this way, the main server (3) can send information, which is in line with the information on the location of local server (2), to each of the local servers (2), while the local server can present such location-based information in the media (1) (e.g. when a vehicle arrives to a certain location point, for example a bus stop, railway station, or to a certain geographically determinable point - object positioned on a certain location, the medium displays useful information related to this location point). The piece of information on this location, which is recorded by an individual local server, also enables an upgrade in terms of interactivity. By using the multimedia communication device (7) (or using wireless electronic communication devices), users can communicate with the main server (3) and get additional information relating to a certain location and/or interactively use other services (for example buy a concert ticket, participate in a survey, etc.). Local server (2) can be used as an interactive means of communication among users (e.g. blogs found in a medium, surveys conducted through multimedia communication devices). The area of interactive communication carried out between the system and the user (8) depends on the location of a multimedia communication device (7) for each local server (2) or medium 1.

The system provides a new type of communication with the users which is interactive and therefore does not go only one way. In addition, the information is based on current location of a specific media. The system also supports the advertising option.

It is, of course, only self-evident that the described solution could be implemented in different design variations. However, this would not change the essence of the invention.

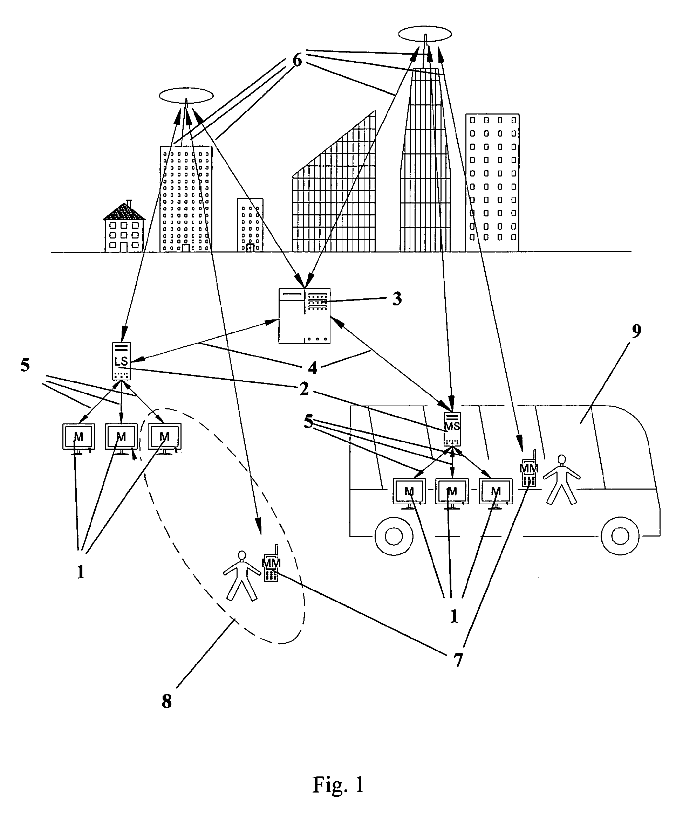

## Claims

1. An interactive system designed for the supply or submission of general information as well as advertising, marketing and other material through electronic communication technologies, either in connection or in line with location-based services, with the possibility of interactive connections **characterized by** a system that uses or operates in line with location-based services; with data transfer through multimedia communication devices or wireless electronic communication technologies, said system enabling interactive cooperation by users.

2. The invention according to Claim 1, **characterized by** a field of supply or submission of general location-specific information which is useful to the user at a certain location, through a medium designed for users who can interactively communicate through the system by using mobile or wireless electronic communication devices, with the media being any of the graphic displays available.

3. The invention according to any of Claims 1 or 2, **characterized by** the field of primitives: one or more media / one or more local servers / one or more main servers, with the individual primitives connected by transport channels.

4. The invention according to any of Claims 1 to 3, **characterized by** enabling the user to interactively communicate with the system by using a multimedia communication device.

5. The invention according to any of Claims 1 to 4, **characterized by** each local server positioned at a specific location and controlling the operation of individual media found at that location as well as communicating with the main server. In this, the local server positioned on a specific location sends information (audio or video records) to the media placed at the location and, through the main server, receives feedback from the users.

6. The invention according to any of Claims 1 to 5, **characterized by** local servers recording location-related information and communicating it to the main server by using the technology of mobile or wireless electronic communication.

7. The invention according to any of Claims 1 to 6, **characterized by** local serves equipped with a GPS device, provided that they are positioned on a mobile unit.

8. The invention according to any of Claims 1 to 7, **characterized by** the main server sending pieces of information based on the main server location to each local server, while the local server shows location-based information in the media.

9. The invention according to any of Claims 1 to 8, **characterized by** operating with the piece of information on main server location, enabling upgrade in terms of interactivity, meaning that users can, through a mobile or wireless electronic communication device, communicate to the main server and acquire further information connected to a specific location and/or interactively use other services.

10. The invention according to any of Claims 1 to 9, **characterized by** local servers that can be used as an interactive means for user communication.

11. The invention according to any of Claims 1 to 10, **characterized by** the main server that supports interaction with the users, which is displayed at the media.

12. The invention according to any of Claims 1 to 11, **characterized by** a system supporting new applications, with one-to-one communication between the application and the user, extended in such a way that the communication process is entered by a number of users who make up virtual groups.

13. The invention according to any of Claims 1 to 12, **characterized by** virtual groups joined by all mobile users, while interactive communication process is not displayed only at the medium positioned at a specific location but also at an internet or mobile portal, television, etc.

14. The invention according to any of Claims 1 to 13, **characterized by** featuring a system supporting not only communication among devices and individuals but also interactive communication carried out among individuals.

15. The invention according to any of Claims 1 to 14, **characterized by** featuring a system that supports the advertising option.

## Amended claims

### Amended claims in accordance with Rule 137(2) EPC.

**1.** An interactive system designed for the supply or submission of and/or exposure to general information as well as advertising, marketing and other material through electronic communication technologies, either in connection or in line with location-based services **characterized by** a use of the system that uses or operates in line with location-based services comprised of main server (3), local server or plurality thereof (2), and multimedia communication device or plurality thereof (7); further **characterized by** use of interactive communication; further **characterized by** data transfer through transport channel (6) by use of mobile phone as the sending device; said system enabling interactive cooperation by users=, ; said system using media means (1) positioned inside vehicles (9) used for public transportation, displays preferably large connected to the local server (2) said means to be used by user (8) or plurality thereof; said communication carried by use of mobile phones (7) preferably by means of SMS or MMS messages, further **characterized in that** the information resulting from interaction of said user (8) or plurality thereof is displayed on said media means (1), said information observed by anyone (8) who finds themselves within said public transportation vehicle (9) and is exposed to the said media means (1).

**2.** The interactive system according to Claim 1, **characterized by** a field of supply or submission of general location-specific information which is useful to the user (8) at a certain location, through a medium (1) designed for users (8) who can interactively communicate through the system by using mobile phone (7), with the media (1) being any of the graphic displays available connected to the local server (2).

**3.** The interactive system according to any of Claims 1 or 2, **characterized by** the field of primitives: one or more media (1) preferably through SMS/MMS / one or more local servers (2) / one or more main servers (3), with the individual primitives connected by transport channel (6) further **characterized in that** data transport is preferably performed locally via Blue Tooth or via wireless communication.

**4.** The interactive system according to any of Claims 1 to 3, **characterized by** enabling the user to interactively communicate with the system by using a mobile phone (7) as the sending device.

**5.** The interactive system according to any of Claims 1 to 4, **characterized by** each local server (2) positioned at a specific location and controlling the operation of individual media found at that location as well as communicating with the main server (2), further **characterized by** local server (2) sending information (audio or video records) to the media (1) placed at the location and, through the main server (3), receives feedback from the users (8).

**6.** The interactive system according to any of Claims 1 to 6, **characterized by** local servers (2) equipped with a GPS device, preferably positioned on a mobile unit.

**7.** The interactive system according to any of Claims 1 to 6, **characterized by** the main server (3) sending pieces of information based on the main server (3) location to each local server (2), while the local server (2) shows location-based information in the media (1).

**8.** The interactive system according to any of Claims 1 to 7, **characterized by** operating with the piece of information on main server (3) location, enabling upgrade in terms of interactivity, meaning that users (8) can, preferably using mobile phone (7) and/or SMS/MMS, communicate to the main server and acquire further information connected to a specific location and/or interactively use other services.

**9.** The interactive system according to any of Claims 1 to 8, **characterized by** local servers (3) that can be used as interactive means for user (8) communication preferably by means of Blue Tooth.

**10.** The interactive system according to any of Claims 1 to 9, **characterized by** the main server that supports interaction with the users (8) preferably using SMS/MMS, which is displayed on the media (1).

**11.** The interactive system according to any of Claims 1 to 10, **characterized by** a system supporting new applications, with one-to-one communication between the application and the user (8), extended in such a way that the communication process is entered by a number of users (8) who make up virtual groups.

**12.** The interactive system according to any of Claims 1 to 11, **characterized by** virtual groups joined by all mobile users (8), while interactive communication process is not displayed only at the medium positioned at a specific location but also at an internet or mobile portal, television, and other electronic receiving device or plurality thereof.

**13.** The interactive system according to any of Claims 1 to 12, **characterized by** featuring a system supporting not only communication among devices and plurality of users (8) but also interactive communication carried out among plurality of users (8).

**14.** The interactive system according to any of Claims 1 to 13, **characterized by** featuring a system that supports the advertising option.
